Europäisches Patentamt

European Patent Office

Office européen des brevets

(11) Numéro de publication: **0 010 337**
**A1**

# (12) DEMANDE DE BREVET EUROPEEN

(21) Numéro de dépôt: **79200597.7**

(22) Date de dépôt: **18.10.79**

(51) Int. Cl.³: **C 02 F 9/00**
C 02 F 3/20, C 02 F 1/52
B 01 D 21/00

(30) Priorité: **24.10.78 BE 46646**

(43) Date de publication de la demande:
**30.04.80 Bulletin 80/9**

(84) Etats Contractants Désignés:
**AT CH DE FR GB IT LU NL SE**

(71) Demandeur: **Godar, Serge**
**330 avenue des Croix de Guerre**
**B-1120 Bruxelles(BE)**

(72) Inventeur: **Godar, Serge**
**330 avenue des Croix de Guerre**
**B-1120 Bruxelles(BE)**

(74) Mandataire: **Dellicour, Paul (BE)**
**Office de brevets E. Dellicour 18/012, rue Fabry**
**B-4000 Liège(BE)**

(54) Installation de prélèvement et de traitement d'épuration d'eaux et d'effluents aqueux.

(57) L'installation comporte deux éléments essentiels, d'une part, un appareillage de prise d'eau (1), dans lequel sont effectuées diverses opérations de traitement physiques et chimiques (3, 8, 9, 10) et, d'autre part, un appareillage d'épuration plus élaboré comprenant un réacteur tubulaire (12) et un décanteur (18), asservi à l'appareillage de prise (1), spécialement en ce qui concerne le transfert des eaux à traiter, ce transfert depuis la prise jusqu'a la décantation étant réalisé au moyen d'une pompe unique (7), dont le débit contrôlé conditionne l'ensemble des traitements jusqu'a la décantation.

EP 0 010 337 A1

./...

Le prélèvement et le traitement classiques
d'épuration d'eaux et d'effluents aqueux d'origines diverses comprennent généralement les étapes suivantes :

1°) Prélèvement ou prise de ces eaux et effluents aqueux au moyen d'une ou plusieurs pompes, avec
élimination facultative des débris, grosses particules,
objets, petits animaux, au moyen de grilles empêchant
ceux-ci de pénétrer dans les pompes et les installations
de traitement. Les grilles et les pompes (munies ou non
de crépines), suivant les types d'installation, peuvent
être situées sur plan ferme (à terre) ou portées par un
ou plusieurs flotteurs.

2°) Un système d'élimination de substances,
dont la densité est inférieure à celle des eaux et d'effluents aqueux, peut être ajouté en prétraitement pour
éviter leur entraînement dans les installations de traitement ;

3°) Une filtration ou tamisage fin facultatif
peut parfaire ce prétraitement des eaux et effluents
aqueux avant les différentes étapes des traitements chimiques ou physiques proprement dits ;

4°) Les traitements chimiques de ces eaux sont
conçus en fonction de la nature des pollutions, afin
d'aboutir à une eau ou à des effluents aqueux satisfaisant à des normes légales ou à des concentrations non
toxiques pour la faune et/ou la flore et/ou pour l'homme
ou encore pour permettre certaines applications industrielles. Ces diverses opérations se font généralement dans une ou plusieurs cuves, dans le sens le plus large, placées généralement en série, dont la grandeur dépend principalement du débit à fournir, de la nature et de la durée des traitements appliqués.

5°) Une séparation des produits insolubles, résultant principalement des traitements chimiques, au moyen d'un ou plusieurs décanteurs et/ou de filtres (avec éventuellement un ou plusieurs concentrateurs de boues, lorsque l'importance ou la nature de l'installation les justifie) ;

6°) Si besoin est, un ou plusieurs traitements spécifiques, selon les buts poursuivis, comme par exemple, une stérilisation temporaire ou permanente jusqu'à utilisation ou réutilisation de ces eaux, ou encore l'addition de réactifs en vue d'apporter une modification de concentration d'une ou plusieurs substances minérales ou organiques de ces eaux ou ces effluents.

Ces traitements classiques nécessitent généralement des surfaces étendues, un appareillage important, une infrastructure non négligeable, dont les coûts sont relativement élevés.

Si dans le cas de besoins importants, publics ou industriels, les coûts sont justifiés, il n'en est pas de même dans le cas des faibles débits (inférieurs par exemple à 50 m3/heure), spécialement lorsque ceux-ci sont limités dans le temps ou occasionnels, et que ces installations sont à poste fixe ou mobiles.

D'autre part, la conception générale de grandes installations peut difficilement être extrapolée à de petites installations, lorsque celles-ci doivent être compactes et légères et que les durées de chaque étape complète du ou des traitements sont limitées pour ces raisons dans le temps.

Ceci vaut spécialement pour les installations mobiles, car dans ce cas, il faut assurer, pour obtenir un rendement optimal, des étapes de traitements complets mais de durées bien définies, ces facteurs influençant la grandeur et/ou le poids de l'installation à transporter, avec pour conséquence notamment une répercussion sur le coût de l'installation et du traitement global.

La présente invention est relative à une installation compacte et simplifiée de prélèvement et de traitements divers d'épuration d'eaux et d'effluents aqueux d'origines diverses, de préférence mobile, sans que cette dernière caractéristique soit limitative. Le terme mobile doit être interprété également comme transportable.

La compacité et la simplification de l'installation visent également l'allègement en poids de l'ensemble, quand ce dernier facteur est important pour le moyen de transport envisagé (avion, bateau, véhicule terrestre).

L'installation faisant l'objet de la présente invention est caractérisée par le fait qu'elle comporte deux éléments essentiels, d'une part un appareillage de prise d'eau, dans lequel sont effectuées diverses opérations de traitements physiques et chimiques et, d'autre part, un appareillage d'épuration plus élaboré asservi à l'appareillage de prise, spécialement en ce qui concerne le transfert des eaux ou des effluents aqueux à traiter, ce transfert depuis la prise jusqu'à la décantation étant réalisé au moyen d'une pompe unique, dont le débit contrôlé conditionne l'ensemble des traitements jusqu'à la décantation.

Suivant l'invention, l'appareillage de prise d'eau comporte un compartiment d'aération obtenue par dégagement d'air comprimé sous forme de fines bulles, le débit d'air injecté étant adaptable au débit des eaux ou des effluents à traiter.

Egalement suivant l'invention, la pompe de prise est agencée de telle manière qu'elle aspire, à travers l'appareillage de prise, l'eau et les effluents aqueux en permettant leur aération, refoule l'eau et les effluents aqueux vers l'appareillage d'épuration élaborée, et permet d'effectuer un prétraitement chimique par réactifs gazeux ou liquides par injection de réactifs aux entrées d'eaux ou d'effluents aqueux dans ladite pompe.

L'installation de traitement proprement dite conforme à l'invention comporte dans l'ordre un réacteur tubulaire continu, un décanteur du type à décantation accélérée, et un ou plusieurs filtres.

Suivant l'invention, le réacteur tubulaire continu est constitué par un tuyau ou tube disposé en spirales concentriques superposées.

Suivant l'invention encore, le décanteur se présente sous la forme d'un réservoir prismatique surmontant une trémie et comporte une série de compartiments, dont des compartiments supérieurs obliques accolés l'un à l'autre, l'entrée étant située dans le premier de ces compartiments où l'eau chargée de particules circule de haut en bas, tandis que le courant est ascensionnel dans les autres compartiments obliques, un compartiment horizontal s'ouvrant sous ces compartiments obliques et au-dessus d'un compartiment inférieur formant la trémie destiné à l'évacuation des particules sous forme de boues.

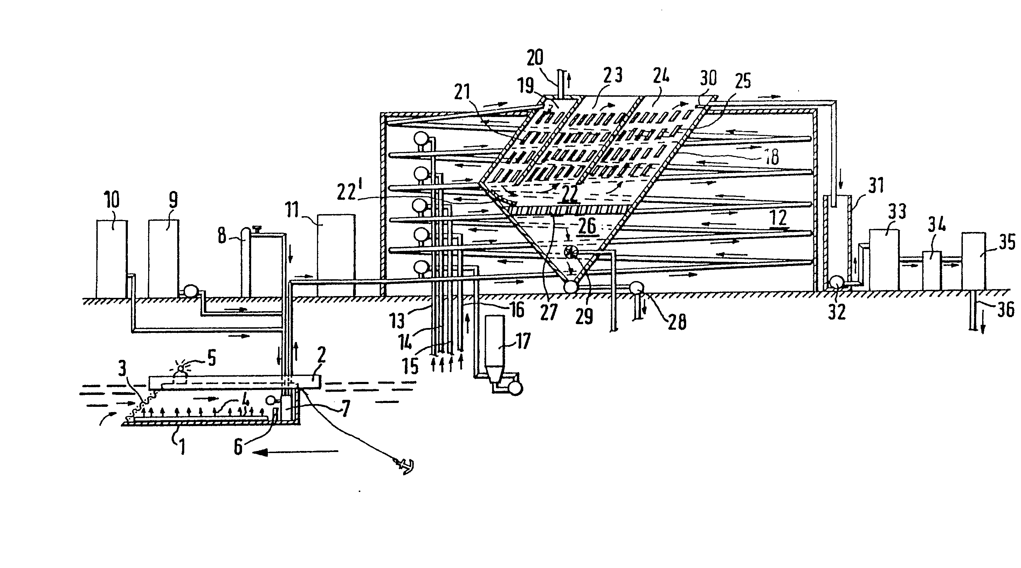

Pour mieux faire comprendre l'invention, celle-ci est décrite maintenant, avec plus de détails, sur la base du dessin schématique annexé d'un exemple de réalisation d'une installation de prélèvement et de traitement d'épuration d'eaux et d'effluents aqueux.

L'installation représentée au dessin comporte un appareillage de prise d'eau, constitué par un récipient 1 partiellement immergé, supporté par des flotteurs 2 (prise flottante). La forme extérieure de ce récipient est adaptée à son utilisation possible en eau courante ou effluents courants, c'est-à-dire avec un avant hydrodynamique de manière à permettre un écoulement aisé des eaux et des effluents aqueux lorsque ceux-ci sont en mouvement. Le point d'ancrage doit être tel que la forme effilée se présente à contre-courant. L'arrière est constitué par une grille inclinée 3, de préférence à 45°, par où les eaux ou les effluents aqueux à traiter entrent dans la prise flottante.

La disposition de la grille à l'arrière et son inclinaison ont pour but de diminuer considérablement l'accumulation de débris sur celle-ci. La grandeur des mailles, de l'ordre de 2 mm, est choisie de telle sorte que les objets les plus divers (bois, feuilles, animaux éventuels) ne pénètrent dans l'appareil. La grandeur des mailles et l'inclinaison de la grille permettent également un décolmatage partiel de la grille par de l'air injecté derrière la grille (côté angle aigu). Cette grille peut être double, de telle sorte que l'on puisse en décolmater l'une des deux sans interrompre le fonctionnement de l'ensemble de l'installation.

La partie située derrière la grille est constituée par un compartiment d'aération 4 obtenue par dégagement d'air comprimé sous forme de fines bulles, au moyen de tubes ou plaques poreuses par exemple. Le débit d'air injecté est adaptable au débit des eaux ou des effluents à traiter, de telle sorte que chaque litre de ceux-ci soit aéré par une quantité d'air choisie, de préférence entre 1 et 50 litres. Cette injection d'air a pour but d'éliminer partiellement ou totalement par déplacement les substances volatiles en solution ou en dispersion dans l'eau (tels que produits malodorants et/ou toxiques et/ou des hydrocarbures légers, etc.). Cette opération évite également l'introduction dans l'appareil

- 6 -

des substances flottantes, tels que huiles, hydrocarbures lourds, etc. La partie aérée commence donc sous la grille et se termine à une distance telle que le rapport ou volume air/eau soit de préférence entre 1 et 50.

Le système de dégagement d'air comprimé est protégé par une grille, qui a pour fonction également de mieux répartir les bulles d'air.

Le degré d'immersion de l'appareil est tel que le bord ouvert de ce compartiment ne permet pas de rentrée d'eau n'ayant pas passé par la grille 3. Le bord émerge d'environ 5 cm à 10 cm au-dessus de la surface des eaux ou des effluents aqueux à traiter.

Le réglage de l'horizontalité de la prise flottante s'effectue par un contre-poids mobile, placé de préférence à la partie supérieure, sur l'axe médian dans le sens de la longueur de l'appareil. Il peut être constitué par un fanal clignotant 5 muni de ses piles ou accus, servant d'indicateur nocturne de position.

Le compartiment d'aération 4 se termine par une cloison 6 dont la hauteur, à partir du fond, est telle que les bulles d'air dégagées ne puissent entrer dans le dernier compartiment où se trouve la pompe de prise immergée 7.

Cette pompe a plusieurs fonctions :

a. Elle aspire l'eau ou les effluents aqueux de l'arrière de la prise flottante vers l'avant de celle-ci en assurant son tamisage au travers des grilles situées à l'arrière ;

b. Elle permet l'aération des eaux ou des effluents aqueux par le transfert de ceux-ci de l'arrière vers l'avant ;

c. Elle refoule l'eau ou les effluents aqueux vers l'appareillage d'épuration élaborée, situé généralement à terre ;

d. Elle permet en outre d'effectuer un prétraitement chimique par réactifs gazeux ou liquides, en insérant aux entrées d'eaux ou d'effluents aqueux dans la pompe proprement dite, une ou plusieurs tubulures d'arrivées de réactifs.

En ce qui concerne l'injection de réactifs en solution (9), ce système n'est en principe pas limitatif quant au nombre de solutions. Il permet en outre un contact efficace entre l'eau ou les effluents aqueux à traiter et les réactifs.

En ce qui concerne l'injection des réactifs gazeux (8, 10) tels que, par exemple : du chlore, du dioxyde de chlore, de l'anhydride sulfureux, de l'ozone, etc., ceux-ci peuvent, par exemple de cette manière, être introduits dans le circuit de traitement, sous faible pression, lorsque cette dernière est liée à son système de production.

Pour certains types de pompes, on est toutefois limité quant à ce type d'injection quand le débit du réactif gazeux est trop grand, car il peut se produire un désamorçage de la pompe. Ce système est particulièrement intéressant pour les produits pouvant subir une décomposition dans les pompes doseuses, comme de l'eau oxygénée par exemple.

Une des caractéristiques de cette pompe est d'être munie d'un interrupteur à flotteur qui commande le fonctionnement et l'arrêt d'une ou de plusieurs pompes et pompes doseuses, vannes, alarmes, etc. insérées dans le circuit global du traitement. Une autre caractéristique de cette pompe est d'être fixée sur un bâti lui-même détachable de la prise flottante.

A ce bâti sont fixés le tuyau de refoulement de la pompe, les conduits d'amenée des réactifs liquides ou gazeux. L'arrivée d'air alimentant le système d'aération est fixéeà la prise flottante.

Le bâti auquel sont fixés la pompe et les conduits d'amenée des réactifs gazeux et/ou liquides est détachable de la prise flottante pour pouvoir être utilisé pour des prises d'eau ou d'effluents aqueux dans les cas où la profondeur n'est pas suffisante pour permettre l'utilisation de la prise flottante (cas des torrents ou des caniveaux par exemple).

Ce bâti peut se placer dans un récipient de forme cylindrique et de faible hauteur, grillagé à sa partie supérieure, de telle sorte que l'eau ou les effluents aqueux puissent pénétrer par cette ouverture pour atteindre la pompe sans entraîner de débris et surtout de la vase ou des dépôts.

Il va de soi que dans le cadre du système proposé, la pompe de prise (de préférence du type auto-amorçante), peut être placée sur terrain ferme, pour autant que son conduit d'aspiration (avec ou sans clapet de pied) soit situé au même endroit sur la prise flottante que l'était la prise d'eau de la pompe immergée de la première description.

Il va de soi également, que dans ces conditions, les conduits d'arrivée des réactifs gazeux ou liquides sont proches ou situés à l'intérieur de ce tuyau d'aspiration d'eau. Il est aussi évident que l'interrupteur à flotteur, commandant la pompe et d'autres systèmes asservis, se trouve également dans la prise flottante. Il va de soi que la nature des matériaux utilisés est telle qu'ils résistent aux actions des eaux à traiter et des réactifs employés. En ce qui concerne les liaisons hydrauliques et électriques, elles sont effectuées par des raccords étanches, de préférence du type rapide.

On a supposé dans la description qui précède que l'appareillage de prise d'eau était immergé dans le courant des eaux ou des effluents aqueux à traiter mais, bien entendu, il peut aussi suivant l'invention être disposé sur le terrain dans un réservoir de conception analogue à la prise flottante précédemment décrite (grilles, compartiment d'aération, pompe), mais l'alimentation en eaux ou effluents aqueux dudit réservoir est faite par l'intermédiaire, soit d'une pompe immergée et d'un tuyau de raccordement, soit d'une pompe placée à terre et d'un tuyau de raccordement, pour autant que son conduit d'aspiration (avec crépine et avec ou sans clapet de pied) plonge dans l'eau ou l'effluent.

L'installation comporte d'autre part un appareillage d'épuration, qui peut être fixe ou mobile et qui consiste en un tableau de commande et de jonction 11 avec la prise flottante 1, une installation de traitement proprement dite, et des appareillages auxiliaires.

Le tableau de commande 11 comporte les jonctions diverses par tuyaux et fils souples entre la prise flottante, l'installation d'épuration proprement dite et les auxiliaires (compresseurs, générateurs de réactifs gazeux ou en solution, conducteurs électriques). Il comporte également différents systèmes de contrôle (vannes réglables, débitmètres, manomètres, thermomètres et des instruments analytiques).

De son côté, l'installation de traitement comporte un réacteur continu, un décanteur et des filtres.

Le traitement des eaux et des effluents aqueux divers consiste principalement à ajouter des réactifs dans des quantités déterminées en fonction de la nature et de la concentration du ou des polluants, du volume à traiter et du temps nécessaire pour que les réactions chimiques puissent s'effectuer, afin d'obtenir une eau ou un effluent répondant aux critères d'épuration.

Etant donné que dans certains cas, le volume et/ou le poids de l'installation sont des paramètres importants, il y a lieu d'effectuer chaque réaction d'épuration dans le temps le plus court, ce qui implique une parfaite homogénéisation du mélange eau à traiter et réactifs, spécialement si ces derniers sont faiblement solubles ou insolubles (cas d'introduction d'adsorbants ou de résines échangeuses d'ions organiques et inorganiques). Il est, d'autre part, intéressant d'utiliser complètement des réactifs gazeux (chlore, anhydride carbonique, anhydride sulfureux, bioxyde de chlore, ozone, etc.).

Or, on constate bien souvent dans la pratique, une perte partielle de ceux-ci avec pour conséquence un risque de pollution gazeuse et un danger pour le personnel travaillant autour de l'installation. Ce cas se présente généralement dans des cuves de traitement placées en série dans une installation classique d'épuration.

C'est pourquoi il a été préféré, suivant l'invention, un réacteur tubulaire continu 12 constitué par un tuyau ou tube, dont les dimensions sont fonction du débit d'eau à traiter et du temps total nécessaire pour effectuer toutes les réactions chimiques d'épuration. Comme chaque réaction doit s'effectuer dans un temps donné, on dispose à différentes longueurs de ce tuyau des points d'injection de réactifs alimentés par des pompes doseuses avec cuves à réactifs 13 à 17. Comme les réactions chimiques et physiques d'épuration mettent parfois en oeuvre des produits solides et généralement insolubles, que d'autre part, il y a formation de précipités, la conception d'un tel réacteur de traitement impose une vitesse linéaire du fluide (eau ou effluents + réactifs en solution et/ou en suspension + précipités) telle qu'il n'y ait pas de dépôt à l'intérieur de ce dernier. On impose donc une vitesse linéaire du fluide comprise entre 0,40 et 1 m/sec., de préférence de 0,55 à 0,70 m/ sec.

D'autre part, on considère qu'un traitement total de dépollution (avant la séparation des matières solides/liquide épuré) ne doit pas durer plus de trente à quarante-cinq minutes, sans que ce temps puisse constituer une limitation. On obtient pour ces conditions, données à titre exemplatif, les longueurs limites théoriques que peut avoir le réacteur tubulaire, soit donc 720 à 2.700 mètres. Comme d'autres facteurs doivent entrer en ligne de compte, poids, encombrement et coût notamment, on considère que pour ces durées de traitement, le débit pratique est de l'ordre de 10 à 15 m3/heure, spécialement s'il s'agit d'installations transportables.

Dès lors, le problème le plus important est la disposition d'une telle longueur sous une forme compacte et tenant compte de la mise en oeuvre de la matière constituant le tuyau.

Suivant la présente invention, le réacteur tubulaire est disposé dans sa longueur totale ou en sections de celle-ci dans un ou plusieurs conteneurs (compris dans le sens le plus large) de préférence superposables. Ces conteneurs peuvent être réalisés en toute matière, pour autant que les propriétés mécaniques de celles-ci le permettent. Ce conteneur se présentera, de préférence, sous la forme d'un double parallélépipède ou d'un double cylindre ou de toute forme double intermédiaire, les éléments concentriques déterminant entre eux le conteneur proprement dit.

A l'intérieur de ce conteneur, le tuyau est enroulé en spirales jointives ou légèrement espacées mais parallèles à partir du bord intérieur du grand parallélépipède ou grand cylindre (entrée du fluide débouchant sur la surface extérieure) vers le bord extérieur du petit parallélépipède ou petit cylindre, puis par superposition sur une spirale inférieure du bord extérieur du petit parallélépipède ou du petit cylindre vers le bord intérieur du grand parallélépipède ou du grand cylindre, de telle sorte que la fin du réacteur ou d'une section de ce dernier puisse aboutir sur une face extérieure, de préférence sur celle de l'entrée.

Le nombre d'étages est donc choisi de préférence, pour que le tuyau ou tube aille du bord extérieur vers le bord intérieur ou vice versa.

Il va de soi que les propriétés mécaniques du conteneur seront un des facteurs limitatifs de ses dimensions.

Comme la courbure du tuyau ou tube doit être limitée pour diverses raisons, principalement mécaniques, il existe une zone inutilisée dans la partie centrale du conteneur et dans les quatre coins de ce dernier, si une forme parallélépipédique stricte est appliquée. Ceci n'exclut pas, dans la même idée, un conteneur en forme de couronne, avec ou sans parties droites.

Les avantantages de la disposition du tube ou tuyau dans un conteneur sont les suivants :

a. Contenir la spirale continue (forme hélicoïdale) ;

b. Permettre éventuellement un chauffage ou un refroidissement du tuyau au moyen d'un fluide extérieur ;

c. Obtenir un système souple pour effectuer les traitements divers, en ce sens que si l'on désire augmenter ou diminuer, par exemple, les temps de réaction, on peut ajouter ou retrancher un ou plusieurs conteneurs, ceux-ci étant interconnectables.

Le système d'empilement des conteneurs permet une économie de surface de base par rapport au système de disposition des conteneurs les uns à côté des autres.

Il permet, en outre, toujours dans un souci d'économie de place, d'utiliser la partie centrale pour y placer un décanteur 18, de préférence du type à décantation accélérée (à tubes, à plaques, etc.), la sortie

- 13 -

du tuyau de conteneur supérieur pouvant correspondre à l'entrée dudit décanteur.

Le système d'empilement des conteneurs permet d'obtenir en fait une spirale continue quasi hélicoïdale allant du bas vers le haut (si l'on se place du point de vue de l'eau ou des effluents à traiter), de telle sorte que des gaz ou vapeurs peuvent être plus facilement éliminés.

De toute façon, aux vitesses de l'eau ou des effluents préconisées ici il n'y a pas d'accumulation de gaz ou vapeurs, même si, par exemple, dans la section réservée à la floculation, le liquide circule éventuellement de haut en bas, afin d'entraîner plus facilement les flocs, parfois lourds et susceptibles de circuler à vitesse moins élevée que le liquide (risque d'accumulation).

Chaque conteneur peut contenir dans les espaces libres une ou plusieurs pompes doseuses et sur les faces extérieures, on peut disposer les entrées et sorties de réactifs pour pompes doseuses, les voyants de passage, des entrées pour sondes ou électrodes, ou éléments sensibles d'instruments de contrôle qui sont insérés dans le tuyau, des passages pour conducteurs d'alimentation, de manière que chaque conteneur puisse constituer un ensemble complet de traitement.

Si besoin est, on peut disposer, également après chaque entrée de réactif dans le tuyau, un mélangeur statique. La section peut contenir également des air-lifts et/ou des éjecteurs et/ou des générateurs d'ultrasons.

Il va de soi que ces conteneurs, lorsqu'ils sont superposés peuvent être fixés les uns aux autres, soit par des attaches, dans le sens le plus large, y compris des pattes situées sur la face intérieure s'emboîtant dans des alvéoles prévues à cet effet dans le

- 14 -

conteneur qui lui est inférieur.

Pour des raisons d'économie, on peut également rendre étanche la jonction entre deux conteneurs superposables, de telle façon que le fond de l'un corresponde au couvercle de l'autre.

Comme il a été dit plus avant, chaque conteneur, pour des raisons de poids, de résistance mécanique, de facilité de montage, de manutention, de transport ou encore pour éviter l'écrasement des tuyaux si ceux-ci sont constitués par une matière souple (matières plastiques par exemple) ne peut contenir qu'un nombre limité d'étages superposés de tuyaux, spécialement si les spirales sont disposées côte à côte sans support ni pièce d'écartement, ni armature. Toutefois, ce qui précède n'exclut pas l'utilisation de ceux-ci pour assurer à cet assemblage une certaine immobilisation du tuyau et également permettre une réfrigération ou un chauffage par fluide extérieur au tuyau.

Pour autant que le poids et l'encombrement le permettent, une autre disposition du réacteur tubulaire consiste également à placer le tuyau ou tube en spirales concentriques superposées, dans la même conception que celle précédemment décrite et ceci dans le sens le plus large, dans une armature support, au sein de laquelle le tuyau ou tube constituant le réacteur tubulaire peut être fixé solidement au moyen d'attaches ou dans des encoches découpées dans des supports tant verticaux qu'horizontaux.

Il va de soi que ce type de conception, comme le précédent, doit permettre le jeu normal de dilatation et d'allongement du tuyau.

Comme dans le cas précédent, l'armature-support peut contenir les pompes doseuses et les faces extérieures comprennent les mêmes éléments que ceux disposés sur les faces extérieures des conteneurs précédemment

- 15 -

décrits.

Le décanteur 18 prévu pour cette installation est de préférence du type à décantation accélérée, à tubes ou à plaques, auquel il est apporté différents perfectionnements. Il se présente sous la forme d'un prisme oblique à base rectangulaire accolé par la base à une pyramide inversée. Ses fonctions sont les suivantes :

a) Assurer l'évacuation des gaz, vapeurs ou air sans pollution de l'environnement immédiat de l'installation ;

b) Séparer les flocs de l'eau ou des effluents traités ;

c) Entraîner la majeure partie des flocs ou précipité à l'extérieur de l'installation.

Le décanteur comporte cinq compartiments. Le premier 19, où se situe à la partie supérieure l'entrée du décanteur, reçoit les gaz, vapeurs, l'air et l'eau chargée de particules en suspension (flocs). L'espace fermé surmontant le niveau d'eau permet la séparation des gaz, vapeurs ou d'air de l'eau aux fins d'évacuation par une tuyauterie 20. Sa partie inférieure comporte des plaques inclinées 21, de préférence à 55°, sur lesquelles glissent les flocs apportés par l'eau ou les effluents traités. Dans ce compartiment, l'eau et les flocs vont dans le même sens, c'est-à-dire du haut vers le bas.

Le deuxième compartiment 22 est un espace libre dans lequel l'eau et une partie du précipité circulent horizontalement.

Les troisième et quatrième compartiments 23, 24, placés côte à côte et également accolés au premier, comportent des tubes 25 ou plaques inclinées, de préférence à 55°, dans lesquels les particules entraînées par le courant ascensionnel de l'eau se déposent sur ceux-ci puis descendent en sens inverse au courant vers le deuxième compartiment 22 et le cinquième compartiment 26.

Dans ces compartiments, la vitesse de l'eau est au minimum de deux fois inférieure à celle du premier compartiment. On choisira, de préférence, une vitesse ascensionnelle de 1 mm/sec.

Le cinquième compartiment 26 qui se trouve sous les compartiments un, trois, quatre et deux a pour but de concentrer par sa forme pyramidale les particules provenant des autres compartiments. Ce cinquième compartiment est séparé des autres par un assemblage de tubes verticaux à paroi mince 27 de 2 cm à 5 cm de diamètre, d'une longueur de 10 cm et accolés les uns aux autres. Ces tubes peuvent avoir une inclinaison de 0° à 60°, angle formé par le sens de circulation de l'eau et la paroi des tubes (angle aigu). En outre, sous le premier compartiment 19 une plaque recourbée 22', couvrant partiellement ces tubes 27, communique à l'eau un mouvement horizontal.

Les tubes verticaux, à paroi mince, ont pour but, tout en laissant descendre les flocs dans le cinquième compartiment, de créer une zone sans remous, évitant ainsi l'entraînement vers le haut des flocs déjà décantés.

Au sommet de la pyramide inversée, c'est-à-dire à la partie la plus basse du décanteur, une tubulure reliée de préférence à une pompe à débit réglable 28 évacue à l'extérieur les boues constituées par les flocs ou le précipité.

Afin d'obtenir une évacuation régulière des boues et également un décollement aisé du précipité collé éventuellement aux parois, plaques et tubes du décanteur, on peut disposer dans ce cinquième compartiment un agitateur vibrant 29, magnétique ou mécanique à course réglable, à fonctionnement permanent ou intermittent.

Il va de soi qu'un ou plusieurs vibreurs mécaniques ou électromagnétiques peuvent être disposés sur les parois extérieures du cinquième compartiment, quoique la solution antérieure (vibrations au sein de la suspension) soit préférable, spécialement s'il s'agit d'un décanteur métallique dont les parois sont soudées.

L'eau ou effluent, débarrassé des précipités, sortant de la partie supérieure des compartiments trois et quatre, déborde d'une plaque collectrice 30, crénelée ou bordée de pointes, et est évacué vers les filtres. Le niveau de cette plaque est situé de préférence à quelques centimètres sous le niveau de la tubulure d'entrée du décanteur.

L'eau débarrassée en majeure partie des matières solides est amenée par gravité depuis la sortie du décanteur dans une cuve de reprise 31, où se trouve la pompe 32 ou la prise de la pompe alimentant les filtres 33. Cette cuve est munie d'un trop-plein et d'un tuyau de vidange.

Elle contient également les électrodes pH mètre et autres éléments sensibles d'appareils de contrôle. Le niveau de l'eau est contrôlé par deux sondes, niveau haut et niveau bas, auxquelles est asservi le fonctionnement de la pompe alimentant les filtres. Le volume utile de cette cuve est calculé de telle sorte que, tenant compte du débit de sortie d'eau du décanteur, la pompe ne s'enclenche et ne se déclenche que quelques fois par heure de fonctionnement.

La canalisation joignant la pompe aux filtres sera munie d'un clapet anti-retour et d'un manomètre, de préférence à contact, de manière à signaler (lampe ou signal acoustique) la pression limite de consigne du ou des filtres ou le degré de colmatage de ce ou de ces derniers.

Etant donné le pourcentage élevé de séparation solides-liquide obtenu grâce au décanteur décrit précédemment, on affine la séparation solides-liquide au moyen d'un filtre ou de plusieurs filtres disposés en parallèle, dont la caractéristique principale de la matière première filtrante (tissu, papier renforcé) est sa porosité de 50 à 1 micron, de préférence de 10 à 5 microns.

Si besoin est, dans le cas où l'on désire obtenir une eau potable, ce filtre 33 sera suivi de filtres bactériologiques 34, dont la caractéristique principale est la porosité de 1 à 0,1 micron et de préférence de 0,4 à 0,2 micron.

L'appareillage d'épuration comprend des appareillages auxiliaires tels que :

a) Les pompes doseuses destinées à injecter les réactifs ;

b) Un groupe électrogène, si l'installation est mobile et/ou doit pouvoir fonctionner de manière autonome ;

c) Le compresseur destiné à l'aération de la prise flottante ;

d) Le compresseur destiné à alimenter l'ozoneur (avec sécheur d'air) ;

e) L'ozoneur ou le générateur de réactifs gazeux ;

f) Le ou les réservoirs d'eau destinés à mettre en solution ou en suspension les réactifs ou adsorbants ;

g) Les cuves de préparation des réactifs en solution ou en suspension.

Afin d'éviter l'utilisation d'un agitateur pour assurer la dissolution, l'homogénéisation des réactifs solubles, et la dispersion homogène des réactifs insolubles, compris dans le sens le plus large, on a recours dans ce cas à l'utilisation d'une pompe de circulation fonctionnant en circuit fermé, qui présente l'avantage de maintenir l'homogénéité des solutions et des suspensions, spécialement lorsque la cuve se vide du fait de l'alimentation continue des pompes doseuses.

Comme la cuve présente une forme cylindroconique (cône renversé à la base), l'arrivée des réactifs s'effectue au sommet du cône, et la sortie des réactifs tangentiellement à la partie cylindrique de la cuve ou de la base du cône.

Cette disposition de la prise tangentielle engendre un mouvement tourbillonnaire au sein de la solution ou suspension. Du fait de l'arrivée des solutions ou suspensions au centre du bas de la cuve, il se produit un brassage énergique de la solution ou des suspensions. En effet, spécialement dans le cas des suspensions, les particules lancées par le courant vers la surface de la solution ou suspension ont tendance à redescendre le long des parois, où elles atteignent à nouveau le jet central. Elles sont dès lors entraînées à nouveau vers la surface.

La tubulure de prise de solution ou de suspension destinée à l'alimentation des pompes doseuses est placée perpendiculairement à la paroi du cône de la cuve, de préférence entre le sommet du cône et la tubulure de reprise de la pompe de circulation.

Le débit horaire de la pompe doit être au moins de dix fois supérieur au volume utile de la cuve.

Comme appareillages auxiliaires, on peut encore citer :

h) Les appareils de poststérilisation 35, soit à l'iode, au brome, à l'hypochlorite, au dioxyde de chlore, ou tout autre moyen bactéricide ou viricide, où l'eau est dirigée ensuite vers les lieux d'utilisation (36) ;

i) Les appareils de conditionnement de l'eau produite (réservoirs souples) ou, s'il s'agit de délivrer des doses d'eau potable individuelles ou de faible volume, des ensacheuses ou embouteilleuses fonctionnant dans des conditions aseptiques ;

j) Les appareils de conditionnement des précipités (généralement toxiques) dans le sens le plus large, de telle sorte que les précipités soient soustraits à toute possibilité de contamination du lieu de sa production et durant son évacuation ou encore durant son stockage définitif.

L'installation de prélèvement de traitement d'épuration d'eaux et d'effluents aqueux décrite ci-dessus et représentée au dessin annexé est spécialement conçue pour être transportable, mais il est bien entendu qu'elle peut constituer une installation fixe.

Il est du reste aussi bien entendu que diverses modifications peuvent être apportées à la réalisation des éléments constitutifs de l'installation sans qu'on s'écarte pour cela du cadre de la présente invention.

REVENDICATIONS

1.    Installation de prélèvement et de traitement d'épuration d'eaux et d'effluents aqueux, caractérisée en ce qu'elle comporte deux éléments essentiels, d'une part, un appareillage de prise d'eau, dans lequel sont effectuées diverses opérations de traitement physiques et chimiques, et, d'autre part, un appareillage d'épuration plus élaboré asservi à l'appareillage de prise, spécialement en ce qui concerne le transfert des eaux ou des effluents aqueux à traiter, ce transfert depuis la prise jusqu'à la décantation étant réalisé au moyen d'une pompe unique dont le débit contrôlé conditionne l'ensemble des traitements jusqu'à la décantation.

2.    Installation suivant la revendication 1, caractérisée en ce que l'appareillage de prise d'eau comporte un compartiment d'aération obtenue par dégagement d'air comprimé sous forme de fines bulles, le débit d'air injecté étant adaptable au débit des eaux ou des effluents à traiter, de telle sorte que chaque litre de ce débit soit aéré par une quantité d'air choisie entre 1 et 50 litres.

3.    Installation suivant la revendication 1, caractérisée en ce que la pompe de prise est agencée de telle manière qu'elle aspire à travers l'appareillage de prise l'eau et les effluents aqueux en permettant leur aération, refoule l'eau et les effluents aqueux vers l'appareillage d'épuration élaborée, et permet d'effectuer un prétraitement chimique par réactifs gazeux ou liquides par injection de réactifs aux entrées d'eaux ou d'effluents aqueux dans ladite pompe.

4.    Installation suivant les revendications 1 à 3, caractérisée en ce que l'appareillage de prise d'eau est constitué par un récipient partiellement immergé et supporté par des flotteurs, avec un avant hydrodynamique se présentant à contre-courant et un arrière formé par une grille inclinée, à 45° de préférence, la partie interne du récipient située devant la grille (en aval par rapport au courant d'eau ou d'effluent à traiter) formant le compartiment d'aération et comportant des tubes ou plaques poreuses pour le dégagement de l'air comprimé, et le degré d'immersion du récipient étant tel que le bord ouvert dudit compartiment ne permet pas de rentrée d'eau n'ayant pas passé par la grille.

5. Installation suivant les revendications 1 à 3, caractérisée en ce que l'appareillage de prise d'eau est constitué par un récipient disposé à terre, comportant en sa partie interne une grille inclinée, à 45° de préférence, séparant en amont un compartiment d'arrivée d'eau et en aval un compartiment d'aération, avec tubes ou plaques poreuses, pour le dégagement de l'air comprimé, en ce que le compartiment d'arrivée d'eau est alimenté en eaux ou effluents aqueux au moyen d'une pompe immergée et d'un tuyau de raccordement ou au moyen d'une pompe placée à terre et d'un tuyau de raccordement, pour autant que le conduit d'aspiration de ladite pompe (avec crépine et avec ou sans clapet de pied) plonge dans l'eau ou l'effluent à traiter, et en ce que le compartiment d'arrivée d'eau est muni d'un trop-plein situé sous le niveau du bord supérieur de la grille, de telle sorte qu'il n'y ait pas de rentrée d'eaux ou d'effluents aqueux n'ayant pas passé par celle-ci.

6. Installation suivant l'une quelconque des revendications 4 et 5, caractérisée en ce que le compartiment d'aération se termine par une cloison dont la hauteur à partir du fond est telle que les bulles d'air dégagées ne peuvent entrer dans le compartiment voisin, où se trouve la pompe de prise.

7. Installation suivant la revendication 1, carac-

- 23 -

térisée en ce que l'appareillage d'épuration, qui peut être fixe ou mobile, comporte un tableau de commande et de jonction avec l'appareillage de prise, une installation de traitement proprement dite et un appareillage auxiliaire.

8.      Installation suivant la revendication 7, caractérisée en ce que l'installation de traitement proprement dite comporte dans l'ordre un réacteur tubulaire continu, un décanteur du type à décantation accélérée, et un ou plusieurs filtres.

9.      Installation suivant la revendication 8, caractérisée en ce que le réacteur tubulaire continu est constitué par un tuyau ou tube, dont les dimensions sont fonction du débit de liquide à traiter et du temps total nécessaire pour effectuer toutes les réactions chimiques d'épuration.

10.      Installation suivant la revendication 8, caractérisée en ce que, à divers endroits de la longueur du réacteur tubulaire, sont prévus des points d'injection de réactifs alimentés par des pompes doseuses.

11.      Installation suivant la revendication 8, caractérisée en ce que, à l'intérieur du réacteur tubulaire, la vitesse linéaire du fluide (eau ou effluents + réactifs en solution et/ou en suspension + précipités) est comprise entre 0,40 et 1 m/sec., de préférence de 0,55 à 0,70 m/sec., de telle manière qu'il n'y ait pas de dépôt.

12.      Installation suivant la revendication 9, caractérisée en ce que le réacteur tubulaire est disposé dans sa longueur totale ou en sections de celle-ci dans un ou, respectivement, plusieurs conteneurs, dans lesquels le tuyau est enroulé en une série de spirales jointives ou légèrement espacées superposées, le nombre d'étages étant choisi pour que la fin du réacteur, c'est-à-dire dudit tuyau ou d'une section de ce dernier, aboutisse sur une face extérieure du conteneur.

13. Installation suivant la revendication 12, caractérisée en ce que les conteneurs sont interconnectables pour augmenter ou diminuer, entre autres, les temps de réaction et empilables pour permettre une économie de surface d'encombrement.

14. Installation suivant la revendication 9, caractérisée en ce que le tuyau ou tube constituant le réacteur tubulaire continu est disposé en spirales concentriques superposées dans une armature support, au sein de laquelle le tuyau ou tube est fixé solidement.

15. Installation suivant l'une quelconque des revendications 12 et 14, caractérisée en ce que les spirales sont prévues avec une zone centrale libre permettant le logement d'appareillage tel qu'un décanteur.

16. Installation suivant la revendication 8, caractérisée en ce que le mouvement dans le réacteur tubulaire continu est réalisé de bas en haut.

17. Installation suivant la revendication 8, caractérisée en ce que le mouvement dans le réacteur tubulaire continu est réalisé du bas vers le haut jusqu'à la section de floculation, où le mouvement inverse, de haut en bas, se produit.

18. Installation suivant la revendication 8, caractérisée en ce que le décanteur se présente sous la forme d'un réservoir prismatique surmontant une trémie et comporte une série de compartiments, dont des compartiments supérieurs obliques accolés l'un à l'autre, un compartiment horizontal disposé sous ces compartiments supérieurs et un compartiment situé sous les autres et constitué par la trémie, l'entrée étant située dans le premier compartiment oblique dont l'espace fermé surmontant le niveau d'eau est relié à une tuyauterie d'évacuation des gaz, vapeurs ou air séparés de l'eau chargée de particules en suspension tandis que l'eau ou les effluents traités avec les flocs coulent du haut vers le bas sur des plaques inclinées, à environ 55°, tandis que le deuxième compartiment est un espace libre, dans lequel l'eau et une partie du précipité circulent horizontalement, les autres compartiments supérieurs obliques comportant des tubes ou plaques inclinées, à environ 55°, sur lesquels se déposent les particules entraînées par le courant ascensionnel de l'eau pour redescendre vers le deuxième compartiment et la trémie, qui renferme un assemblage de tubes verticaux plus ou moins inclinés, accolés les uns aux autres, et est pourvue à sa base d'une tubulure pour l'évacuation des particules sous forme de boues.

19. Installation suivant la revendication 18, caractérisée en ce que sous le premier compartiment du décanteur et dans l'espace libre constitué par le deuxième compartiment est prévue une ou plusieurs plaques recourbées pour communiquer à l'eau son mouvement horizontal.

20. Installation suivant la revendication 18, caractérisée en ce que dans les troisième et quatrième compartiments l'eau ou les effluents aqueux sortent au sommet à travers une plaque collectrice pour être amenés par gravité vers une cuve de reprise et par pompe vers les filtres.

21. Installation suivant la revendication 18, caractérisée en ce que la vitesse de l'eau dans les troisième et quatrième compartiments est au minimum de deux fois inférieure à celle du premier compartiment, soit de l'ordre de 1 mm/sec.

22. Installation suivant la revendication 18, caractérisée en ce que dans le cinquième compartiment ou trémie est disposé un agitateur vibrant magnétique ou mécanique, à course réglable, à fonctionnement permanent ou intermittent.

23. Installation suivant la revendication 8, caractérisée en ce que comme appareillage auxiliaire elle comporte entre autres des cuves de préparation des réactifs en solution ou en suspension associées chacune à une pompe de circulation fonctionnant en circuit fermé, de manière à maintenir l'homogénéité des solutions et des suspensions.

24.    Installation suivant la revendication 23, caractérisée en ce que une cuve de préparation présente une forme cylindro-conique avec le cône renversé à la base, l'arrivée des réactifs s'effectuant au sommet du cône et leur sortie tangentiellement à la base de la partie cylindrique de la cuve ou à la base du cône.

25.    Installation suivant la revendication 8, caractérisée en ce que comme appareillage auxiliaire elle comporte entre autres des appareils de conditionnement stérile de l'eau épurée, tels que des ensacheuses ou des embouteilleuses.

26.    Installation suivant la revendication 8, caractérisée en ce que comme appareillage auxiliaire elle comporte entre autres des appareils de conditionnement des précipités, généralement toxiques, de manière à permettre leur évacuation ou stockage et éviter la contamination de l'environnement.

Office européen
des brevets

**RAPPORT DE RECHERCHE EUROPEENNE**

Numero de la demande

EP 79 20 0597

| | DOCUMENTS CONSIDERES COMME PERTINENTS | | CLASSEMENT DE LA DEMANDE (Int. Cl.) |
|---|---|---|---|
| Catégorie | Citation du document avec indication, en cas de besoin, des parties pertinentes | Revendica-tion concernee | |
| | FR - A - 2 255 262 (WALTEC INDU-STRIES)<br>* Page 3, ligne 6 - page 4, ligne 39; figure * | 1,2,8 | C 02 F   9/00<br>3/20<br>1/52<br>B 01 D 21/00 |
| | -- | | |
| A | US - A - 4 076 615 (BATTELLE PACIFIC) | | |
| A | FR - A - 2 387 465 (M. LELIEVRE et al. ) | | |
| A | FR - A - 1 575 592 (DORR-OLIVER et al.) | | |
| A | GB - A - 1 346 596 (ALLIED COLLOIDS) | | C 02 F   3/12<br>9/00<br>B 01 D 21/00 |
| A | US - A - 3 607 735 (AIR REDUCTION) | | |
| A | US - A - 3 774 768 (WESTINGHOUSE ELECTRIC) | | |
| A | FR - A - 380 333 (T. LEWICKI) | | |
| A | COAL AGE, vol. 82, no. 1, janvier 1977, New York (US) N.P. CHIRONIS: "Thickener with novel configuration saves space and costs in prep plants, pages 114-118 | | |
| | ---- | | |

DOMAINES TECHNIQUES RECHERCHES (Int. Cl. ³)

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| Le present rapport de recherche a ete etabli pour toutes les revendications | | |
|---|---|---|
| Lieu de la recherche<br>La Haye | Date d'achevement de la recherche<br>25-01-1980 | Examinateur<br>TEPLY |

OEB Form 1503.1   06.78